# EUROPEAN PATENT SPECIFICATION

(11) **EP 2 040 413 B1**
(45) Date of publication and mention of the grant of the patent: **19.06.2013**
(21) Application number: 07116918.9
(22) Date of filing: 21.09.2007
(51) Int. Cl.: H04L 12/14, H04M 15/00, H04L 29/06

(54) **Subscription and advice of charge control**
Abonnements- und Gebührenanzeigenkontrolle
Contrôle de souscription et d'information de taxation

(43) Date of publication of application: 25.03.2009
(73) Proprietor: Nokia Siemens Networks Oy, 02610 Espoo (FI)
(72) Inventor: Hellgren, Vesa, 00530 Helsinki (FI); Jung, Michael, 13503 Berlin (DE)
(74) Representative: Borgström, Markus

(56) References cited:
- WO-A-99/64967
- US-A1- 2004 143 521
- US-A1- 2006 047 814
- US-A1- 2007 180 356

## Description

The present invention is related to subscription and advice of charge control. In particular, the present invention relates to a method of performing such a subscription and advice of charge control as well as to network devices having functionalities implemented which configure these network devices to participate in such a method. In addition, the present invention is also applicable to pass charging policies from content providers and portals to charging systems without building an explicit interface between those systems.

Prior art which is related to this field of technology can be found e.g. in document US 2006/0047814 A1 disclosing a system and method for managing end user approval for charging in a network environment, document US 2004/0143521 A1 disclosing a method and device for paying for services in networks with a single sign-on, document US 2007/0180356 A1 disclosing a content that is searchable but inhibited, and document WO 99/64967 disclosing a method and a system for transmitting a cookie.

Recently, efforts to provide subscription and advice of charge control have been undertaken with respect to service provision in (mobile) packet data networks. The network architecture of a typical 3^{rd} generation packet data network (i.e. according to the 3^{rd} generation partnership project - 3GPP) is as follows.

There is user equipment (UE) which is the device the (mobile) subscriber uses to access packet data services. The gateway GPRS (general packet radio service) support node (GGSN) is the gateway for user plane traffic. All user plane traffic from an access network traverses via the GGSN before it is forwarded to packet data networks or other user equipment. The GGSN can be replaced with any other packet data gateway element. An online charging system (OCS) provides a real-time credit control for user plane traffic managed in the GGSN. The OCS controls the GGSN over for example diameter credit control application (DCCA) sessions. Eventually, there is a top-up server (TS) which implements interaction with a subscriber if there is need to activate subscriptions or an advice of charge needs to be provided. The top-up server can be replaced with any other redirect server element.

The problem is to provide an end-user dialogue from the top-up server in those cases, where an advice of charge is required or a subscriber needs to activate a subscription, before access to content can be provided. The top-up server could be used also to provide additional service authentication. The top-up server may be needed also in those cases where a prepaid user needs to put more funds on the prepaid account to get access to content.

The problem in these use cases is basically the same. That is, the online charging system detects the need for an end user dialogue towards the top-up server based on events it receives from the gateway GPRS support node. If dialogue is needed, the online charging system should notify the gateway GPRS support node. The gateway GPRS support node should implement a redirection of HTTP (hypertext transfer protocol) or WAP (wireless application protocol) traffic to top-up server, which implements end-user interaction. The online charging system defines service authorization, so it needs to get information about a result of the end-user interaction with the top-up server. In addition, the online charging system also controls redirection, so it needs to notify the gateway GPRS support node when redirection is no longer needed.

Specifically, known solutions for providing service authorization are based e.g. on the standardization work of the Liberty Alliance Project.

However, the Liberty approach is that it is designed for single sign-on functionality and it cannot be used to make service reauthorization decisions based on usage of content resources. The Liberty approach provides support only for the cases where authentication of end user is required for service authorization, while in advice of charge and subscription management cases there are also needs to get explicit consent from the end user before service access can be authorized. In summary, the Liberty approach concentrates only on the cases where service authorization is based on the seamless and immutable authentication of the end user, and this is not sufficient in those cases where service authorization depends on other factors such as policies of end users, usage of service content resources or calendar time.

Furthermore, the online charging system can provide credit control function and service authorization function, but within the prior art solutions, there has not yet been defined a proper way of handling interaction with top-up server and gateway GPRS support node.

Document RFC 4006 of the internet engineering task force (IETF) defines graceful service termination where final-unit-indication AVP (attribute value pair) is used to initiate redirection, and then the online charging system removes the redirection need based on explicit reauthorization procedure (RAR message - reauthorization request message), or reauthorization is done once the validity time for final unit action expires.

However, this solution has the following disadvantages.

It requires that the online charging system has an interface to the top-up server. This interface has not yet been standardized. Further, RAR signalling generates a signalling overhead due to the additional messaging needed. The other alternative of sending the credit control request (CCR) once the validity time expires does not change the service authorization status in real time.

Therefore, it is an object of the present invention to overcome the shortcomings of the prior art.

This is accomplished by what is set forth in the appended independent claims, while the appended dependent claims define advantageous modifications thereof.

Other aspects, features and advantages of the present invention will become more fully apparent from the following detailed description of preferred embodiments thereof which is to be taken in conjunction with the appended drawings, in which:

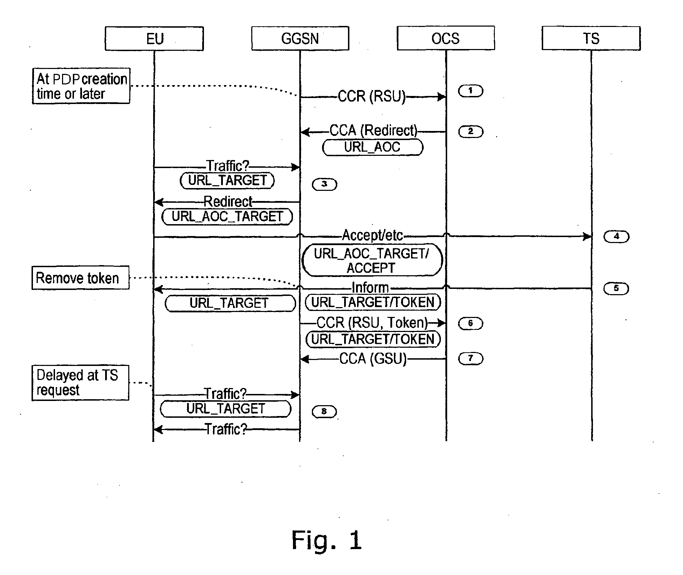

Fig. 1 shows the signalling traffic in a packet data network for providing subscription and advice of charge control according to an embodiment of the present invention.

In the following, preferred embodiments of the present invention are described with reference to the accompanying drawings. It should, however, be understood that this description is for illustrative purposes only and that the present invention is by no means to be construed as being limited to the embodiments described and illustrated.

Specifically, Fig. 1 shows preferred embodiments of the present invention by illustrating signalling between an end user EU (which may participate by e.g. using a user equipment UE), a gateway GPRS support node GGSN, an online charging system OCS, and a top-up server TS. These elements are selected to illustrate an implementation example as a preferred embodiment of the present invention, but are not intended to limit the present invention to these specific elements, as mentioned above. For example, the top-up server is illustrated as an implementation of a redirect server, the GPRS support node GGSN as an implementation of a packet data gateway.

Selected processes of the signalling are labelled by reference numerals 1 to 8 which will be referred to in the following as steps 1 to 8. With respect to the depicted elements EU, GGSN, OCS and TS, Fig. 1 is to be construed such that these elements illustrate devices which are to be understood as being configured to perform the illustrated steps.

With respect to certain messages, URL indications are depicted as implementation examples.

Specifically, when a packet data protocol (PDP) context (bearer session) is created, the gateway GPRS support node already sends an initial credit control request message CCR to the online charging system OCS (step 1) indicating the requested service units (RSU).

In response, the online charging system OCS sends an initial credit control answer message CCA back to the gateway GPRS support node GGSN with which it may initiate redirection for those rating groups, where service authorization requires an additional dialogue with the top-up server TS (step 2). Redirection may be initiated also in any other CCA update message.

When the gateway GPRS support node GGSN detects a HTTP traffic request related to a rating group where redirection is enabled, it will redirect the traffic request to the top-up server TS (step 3).

The top-up server TS provides a service authorization dialogue to the end-user EU (step 4) by e.g. receiving "accept message" etc.

Based on the dialogue result, the top-up server TS responds to the end user EU. The response message (e.g. "inform") includes an authorization token (Step 5). When the gateway GPRS support node GGSN detects the authorization token in the response message coming from a trusted top-up server TS, it will remove the token from HTTP response before forwarding the response to e.g. the user equipment of the end user EU (step 5). Further, gateway GPRS support node GGSN will initiate service authorization towards the online charging system OCS (Step 6) by sending a credit control request message CCR indicating the requested service units (RSU) to the online charging system OCS and asks quota for a related rating group. The authorization token is also included in the CCR message (step 6).

The online charging system OCS verifies and validates the authorization token. Depending on the result, it either allows or denies access to content services. The authorization result is passed back to the gateway GPRS support node GGSN in a credit control answer message CCA (step 7) which may then indicate the granted service units (GSU). Eventually, the gateway GPRS support node GGSN stops redirecting traffic after the credit control answer message CCA has been received (step 8).

Accordingly, in view of the alternative approach of sending authorization token from the UE as discussed above, the following advantages are achieved.

No buffering of e.g. the user traffic requests is required. Redirection is initiated before there is traffic which needs to be redirected. If redirection is not removed before some user equipment tries to access the content service, traffic requests are redirected to the top-up server which can inform the end-user that subscription activation is still in progress.

The top-up server can also delay step 8 so that there is enough time for CCR-CCA interaction before step 8, and thus, when the user equipment is trying to access the service, redirection has already been removed from the gateway GPRS support node. This delaying can be done using known hypertext markup language (HTML) or wireless markup language (WML) tags.

In short, the top-up server may actually delay redirection of traffic back to original site. By doing so, there is some time to handle the signalling between the gateway GPRS support node and the online charging system.

Moreover, the solution according to preferred embodiments of the present invention also works for non-HTTP services. The dialogue is always provided with HTTP so that the authorization token can be sent from the top-up server, but the actual usage of services can be based on any protocol.

Furthermore, the solution according to preferred embodiments of the present invention is secure. The authorization token is accepted only from a trusted server (like for example a top-up server), i.e. such nodes can be configured in the gateway GPRS support node.

For example the gateway GPRS support will ignore an authorization token if it is coming from the user equipment, because user equipment is not configured as trusted source for the authorization token.

With respect to the disadvantage of a alternative solution that it is designed for single sign-on functionality, and that it cannot be used to make service re-authorization decisions based on usage of content resources, the solution according to preferred embodiments of the present invention gives the possibility of making usage-based decisions practically "free". In detail, preferred embodiments of the present invention are based on using online charging interface for controlling redirection and authentication. In other words, usage control and reporting are inherent parts of online charging interface. In contrast thereto, Liberty interfaces are used only for passing authentication and authorization signals, and there is no usage control or reporting. CCR and CCA messages exchanged between the gateway GPRS support node and the online charging system are used also reporting usage data and grant quota for service usage.

It should be noted that the token mechanism described in steps 5 and 6 can be used also to implement other goals than advice of charge and subscriptions. If the top-up server is actually the server providing the content, the token can be used to trigger chargeable events from the top-up server. These chargeable events can then be used to generate charging actions in the online charging system based on e.g. the downloading or uploading of content, revenue sharing, getting some promotional ticket which grants temporarily free access to services, or any other charging policy decision based on the input received from content provider.

Finally, with respect to the above mentioned "token", the following is to be noted. The triad OCS/GGSN/TS is in the state "handling top-up and inhibiting chargeable traffic" and "pass chargeable traffic". A state change must be communicated to the GGSN, wherein it can either come from the top-up server or the online charging system. This would be the "token".

Moreover, according to preferred embodiments of the present invention, this token is used in a specific way. Preferred embodiments of the present invention provide a way that is least complex for both the online charging system and the gateway GPRS support node.

Specifically, an interface between online charging system and a top-up server may be considered to be more complex because of the following. Firstly, such an interface would currently be non-standardized and would be a vendor proprietary interface. Hence, the solution according to preferred embodiments of the present invention circumvents this problem. Secondly, as addressed above, the gateway GPRS support node must be informed of the state change. The top-up server or the online charging system can do that.

However, all solutions requiring the online charging system to do this directly have the disadvantage of creating "triangle" communications (i.e. GGSN->TS->OCS->GGSN ... vs. GGSN->TS->OCS->TS->GGSN->OCS->GGSN). These disadvantages are severe. The reason is that the triangle approach is more costly (mainly due to higher complexity), timeout problems concern the three-way communication, and correlation-identities must be transported and agreed upon by three partners, wherein the interface TS<->OCS is non-standardized, to name just a few.

An implementation of embodiments of the present invention may be achieved by providing a computer program product embodied as a computer readable medium which stores instructions according to the above described embodiments.

Thus, the above description includes a method of providing service authorization. The method comprises sending a message from a redirect server to a user terminal including an authorization token. Further, the method comprises detecting and removing the authorization token by a network gateway node from the message before forwarding the message to the user terminal and initiating a service authorization request including the authorization token by the network gateway node towards an online charging system.

What has been described above is what is presently considered to be preferred embodiments of the present invention. However, as is apparent to the skilled reader, these are provided for illustrative purposes only and are in no way intended to that the present invention is restricted thereto. Rather, it is the intention that all variations and modifications be included which fall within the scope of the appended claims.

## Claims

1. A method of providing service authorization, comprising:
sending a message from a redirect server to a user terminal including an authorization token;
**characterized by**
detecting and removing the authorization token by a network gateway node from the message before forwarding the message to the user terminal; and
initiating a service authorization request including the authorization taken by the network gateway node towards an online charging system.

2. The method according to claim 1, further comprising:
performing an authorization dialogue by the redirect server with the user terminal, wherein the sending of the message from the redirect server to the user terminal is a response message within that dialogue.

3. The method according to claim 1 or 2, wherein the initiating of a service authorization request is performed after the forwarding of the message and before the user terminal requests any traffic after receiving the message.

4. The method according to claim 3, wherein the sending of any traffic by the user terminal is delayed by the redirect server.

5. The method according to claim 3 or 4, wherein the service authorization request is performed by sending a credit control request message to the online charging system which includes the authorization token and asks for permission of a requested service.

6. The method according to any one of claims 1 to 5, further comprising:
initiating a redirection of traffic from a user terminal to a redirect server by informing a network gateway node in advance before traffic is sent by the user terminal.

7. The method according to claim 6, wherein the initiating is performed in response to the creation of a packet data protocol context for said user terminal.

8. The method according to claim 6 or 7, wherein the network gateway node is informed in advance by an online charging system:

9. The method according to any one of claims 1 to 8, wherein the network gateway node is a gateway GPRS support node.

10. The method according to any one of claims 1 to 9, wherein the redirect server is a top-up server.

11. A computer program product embodied on a computer-readable medium, the computer program product configured to provide instructions to carry out a method according to any one of claims 1 to 10.

12. A network gateway device,
**characterized by** being configured to
detect and remove an authorization token from a message of a redirect server to a user terminal;
forward the message to the user terminal thereafter; and send a service authorization request including the authorization taken towards an online
send a service authorization request towards an online charging system.

13. The network gateway device according to claim 12, further configured to
send the service authorization request after the forwarding of the message and before the user terminal requests any traffic after receiving the message.

14. The network gateway device according to claim 13, further configured to
send the service authorization request with a credit control request message to the online charging system which includes the authorization token, and
ask for permission of a requested service.

15. The network gateway device according to any one of claims 12 to 14, further configured to
redirect traffic from a user terminal to a redirect server, before traffic is requested by the user terminal, in response to information received to initiate this redirection.

16. The network gateway device according to any one of claims 12 to 15, wherein the network gateway device is a gateway GPRS support node.

## Patentansprüche

1. Verfahren zum Bereitstellen einer Dienstautorisierung, das Folgendes umfasst:
Senden einer Meldung von einem Umleitungsserver zu einem Nutzer-Endgerät, die ein Autorisierungstoken enthält;
**gekennzeichnet durch**
Detektieren und Entfernen des Autorisierungstokens **durch** einen Netzgatewayknoten aus der Meldung vor dem Weiterleiten der Meldung an das Nutzer-Endgerät; und
Initiieren einer Dienstautorisierungsanforderung, die das Autorisierungstoken enthält, **durch** den Netzgatewayknoten an ein Online-Gebührenberechnungssystem.

2. Verfahren nach Anspruch 1, das des Weiteren Folgendes umfasst:
Ausführen eines Autorisierungsdialogs durch den Umleitungsserver mit dem Nutzer-Endgerät, wobei das Senden der Meldung von dem Umleitungsserver an das Nutzer-Endgerät eine Antwortmeldung innerhalb dieses Dialogs ist.

3. Verfahren nach Anspruch 1 oder 2, wobei das Initiieren einer Dienstautorisierungsanforderung nach der Weiterleitung der Meldung, und bevor das Nutzer-Endgerät Datenverkehr nach dem Empfangen der Meldung anfordert, ausgeführt wird.

4. Verfahren nach Anspruch 3, wobei das Senden von Datenverkehr durch das Nutzer-Endgerät durch den Umleitungsserver verzögert wird.

5. Verfahren nach Anspruch 3 oder 4, wobei die Dienstautorisierungsanforderung durch Senden einer Gutschriftsteuerungsanforderungsmeldung an das Online-Gebührenberechnungssystem ausgeführt wird, die das Autorisierungstoken enthält und um Erlaubnis für den angeforderten Dienst fragt.

6. Verfahren nach einem der Ansprüche 1 bis 5, das des Weiteren Folgendes umfasst:
Initiieren einer Umleitung von Datenverkehr von einem Nutzer-Endgerät an einen Umleitungsserver durch Informieren eines Netzgatewayknotens im Voraus, bevor Datenverkehr durch das Nutzer-Endgerät gesendet wird.

7. Verfahren nach Anspruch 6, wobei das Initiieren als Reaktion auf die Erzeugung eines Paketdatenprotokoll-Kontextes für das Nutzer-Endgerät ausgeführt wird.

8. Verfahren nach Anspruch 6 oder 7, wobei der Netzgatewayknoten im Voraus durch ein Online-Gebührenberechnungssystem informiert wird.

9. Verfahren nach einem der Ansprüche 1 bis 8, wobei der Netzgatewayknoten ein Gateway-GPRS-Unterstützungsknoten ist.

10. Verfahren nach einem der Ansprüche 1 bis 9, wobei der Umleitungsserver ein Top-up-Server ist.

11. Computerprogrammprodukt, das auf einem computerlesbaren Medium verkörpert ist, wobei das Computerprogrammprodukt dafür konfiguriert ist, Instruktionen auszugeben, um ein Verfahren nach einem der Ansprüche 1 bis 10 auszuführen.

12. Netzwerk-Gateway-Gerät,
das **dadurch gekennzeichnet ist, dass** es dafür konfiguriert ist:
ein Autorisierungstoken in einer Meldung eines Umleitungsservers an ein Nutzer-Endgerät zu detektieren und aus der Meldung zu entfernen;
die Meldung anschließend an das Nutzer-Endgerät weiterzuleiten; und
eine Dienstautorisierungsanforderung, die das Autorisierungstoken enthält, an ein Online-Gebührenberechnungssystem zu senden.

13. Netzwerk-Gateway-Gerät nach Anspruch 12, das des Weiteren dafür konfiguriert ist,
die Dienstautorisierungsanforderung nach der Weiterleitung der Meldung, und bevor das Nutzer-Endgerät Datenverkehr nach dem Empfangen der Meldung anfordert, zu senden.

14. Netzwerk-Gateway-Gerät nach Anspruch 13, das des Weiteren dafür konfiguriert ist,
die Dienstautorisierungsanforderung mit einer Gutschriftsteuerungsanforderungsmeldung, die das Autorisierungstoken enthält, an das Online-Gebührenberechnungssystem zu senden, und
um Erlaubnis für einen angeforderten Dienst zu fragen.

15. Netzwerk-Gateway-Gerät nach einem der Ansprüche 12 bis 14, das des Weiteren dafür konfiguriert ist,
Datenverkehr von einem Nutzer-Endgerät zu einem Umleitungsserver umzuleiten, bevor Datenverkehr durch das Nutzer-Endgerät angefordert wird, als Reaktion darauf, dass Informationen empfangen wurden, diese Umleitung zu initiieren.

16. Netzwerk-Gateway-Gerät nach einem der Ansprüche 12 bis 15, wobei das Netzwerk-Gateway-Gerät ein Gateway-GPRS-Unterstützungsknoten ist.

## Revendications

1. Un procédé de fourniture d'une autorisation de service, comprenant :
l'envoi d'un message à partir d'un serveur de réacheminement vers un terminal utilisateur contenant un jeton d'autorisation,
**caractérisé par**
la détection et le retrait du jeton d'autorisation par un noeud de passerelle de réseau du message avant le transfert du message au terminal utilisateur, et
le lancement d'une demande d'autorisation de service contenant le jeton d'autorisation par le noeud de passerelle de réseau vers un système de taxation en ligne.

2. Le procédé selon la revendication 1, comprenant en outre :
l'exécution d'un dialogue d'autorisation par le serveur de réacheminement avec le terminal utilisateur, dans lequel l'envoi du message du serveur de réacheminement au terminal utilisateur est un message de réponse à l'intérieur de ce dialogue.

3. Le procédé selon la revendication 1 ou 2, dans lequel le lancement d'une demande d'autorisation de service est exécuté après le transfert du message et avant que le terminal utilisateur ne demande un trafic quelconque après la réception du message.

4. Le procédé selon la revendication 3, dans lequel l'envoi d'un trafic quelconque par le terminal utilisateur est retardé par le service de réacheminement.

5. Le procédé selon la revendication 3 ou 4, dans lequel la demande d'autorisation de service est exécutée par l'envoi d'un message de demande de contrôle de crédit au système de taxation en ligne qui contient le jeton d'autorisation et demande une permission pour un service requis.

6. Le procédé selon l'une quelconque des revendications 1 à 5, comprenant en outre :
le lancement d'un réacheminement de trafic à partir d'un terminal utilisateur vers un serveur de réacheminement en informant un noeud de passerelle de réseau à l'avance avant que le trafic ne soit envoyé par le terminal utilisateur.

7. Le procédé selon la revendication 6, dans lequel le lancement est exécuté en réponse à la création d'un contexte de protocole de données par paquets pour ledit terminal utilisateur.

8. Le procédé selon la revendication 6 ou 7, dans lequel le noeud de passerelle de réseau est informé à l'avance par un système de taxation en ligne.

9. Le procédé selon l'une quelconque des revendications 1 à 8, dans lequel le noeud de passerelle de réseau est un noeud de prise en charge de GPRS de passerelle.

10. Le procédé selon l'une quelconque des revendications 1 à 9, dans lequel le serveur de réacheminement est un serveur de rechargement.

11. Un produit de programme informatique incorporé sur un support lisible par ordinateur, le produit de programme informatique étant configuré de façon à fournir des instructions destinées à exécuter un procédé selon l'une quelconque des revendications 1 à 10.

12. Un dispositif de passerelle de réseau,
**caractérisé en ce qu'**il est configuré de façon à
détecter et retirer un jeton d'autorisation d'un message d'un serveur de réacheminement vers un terminal utilisateur,
transférer ensuite le message au terminal utilisateur, et
envoyer une demande d'autorisation de service contenant le jeton d'autorisation vers un système de taxation en ligne.

13. Le dispositif de passerelle de réseau selon la revendication 12, configuré en outre de façon à
envoyer la demande d'autorisation de service après le transfert du message et avant que le terminal utilisateur ne demande un trafic quelconque après la réception du message.

14. Le dispositif de passerelle de réseau selon la revendication 13, configuré en outre de façon à
envoyer la demande d'autorisation de service avec un message de demande de contrôle de crédit au système de taxation en ligne qui contient le jeton d'autorisation, et
demander une permission pour un service requis.

15. Le dispositif de passerelle de réseau selon l'une quelconque des revendications 12 à 14, configuré en outre de façon à
réacheminer du trafic à partir d'un terminal utilisateur vers un serveur de réacheminement avant que le trafic ne soit demandé par le terminal utilisateur en réponse à une information reçue visant à lancer ce réacheminement.

16. Le dispositif de passerelle de réseau selon l'une quelconque des revendications 12 à 15, dans lequel le dispositif de passerelle de réseau est un noeud de prise en charge de GPRS de passerelle.
